# EUROPEAN PATENT APPLICATION

(11) **EP 4 678 525 A1**
(43) Date of publication of application: **14.01.2026**
(21) Application number: 24865288.5
(22) Date of filing: 30.08.2024
(51) Int. Cl.: B62K 5/025, B60G 21/05, B62K 25/20

(54) **ELECTRIC MOBILITY APPARATUS**

(30) Priority: 12.09.2023 JP 2023147885
(71) Applicant: Whill, Inc., Tokyo 140-0002 (JP)
(72) Inventor: NAGATA, Shin, Tokyo 140-0002 (JP); NAITO, Junpei, Tokyo 140-0002 (JP); YAMAZAKI, Masanobu, Tokyo 140-0002 (JP)
(74) Representative: Isarpatent
(86) International application number: PCT/JP2024/031230
(87) International publication number: WO 2025/057786

(57) **Abstract**

An electric mobility vehicle at least including a pair of wheels (20) and a vehicle body frame (121), including a pair of swing portions (2), wherein a base end side of each swing portion (2) is supported on the vehicle body frame (121) so as to be swingable in an up-down direction about a swing axis (150a) extending in a vehicle front-to-rear direction, and each wheel (20) is supported on each swing portion (2) so as to move in the up-down direction together with a leading end side of each swing portion (2), a biasing member (140) that applies a downward force to each swing portion (2) when the leading end side moves upward, and a swing control portion (3) that restrains a different-direction swing in which one of the base end sides of the pair of swing portions (2) swings in a direction different from the other in the up-down direction or limits the different-direction swing to a predetermined range.

## Description

### {Technical Field}

The present invention relates to an electric mobility vehicle.

### {Background Art}

As such an electric mobility vehicle, one including a pair of swing bases supported by a vehicle body frame so as to be swingable in an up-down direction, a pair of rear wheels respectively supported by the pair of swing bases, and a biasing member that applies a downward force to the pair of swing bases is known. See PTL 1, for example.

### {Citation List}

### {Patent Literature}

{PTL 1} PCT International Publication No. WO 2021/132533

### {Summary of Invention}

### {Technical Problem}

In the aforementioned electric mobility vehicle, when soft suspension characteristics are sought by using the biasing member having a low spring constant and increasing a swingable range in the up-down direction of each of the swing bases, ride comfort is improved, whereas behavior of the electric mobility vehicle inclining to an outer side of a pivot or turn tends to occur easily.

In view of the aforementioned circumstances, an electric mobility vehicle capable of controlling the behavior of inclining to the outer side of a pivot or turn is desired.

### {Solution to Problem}

An aspect of the present invention is an electric mobility vehicle at least including a pair of wheels and a vehicle body frame, the electric mobility vehicle including: a pair of swing portions, wherein when defining that one end in a vehicle width direction of each of the swing portions is a base end and another end in the vehicle width direction is a leading end, a base end side of each of the swing portions is supported on the vehicle body frame so as to be swingable in an up-down direction about a swing axis extending in a vehicle front-to-rear direction, and each of the wheels is supported on each of the swing portions so as to move in the up-down direction together with a leading end side of each of the swing portions, wherein the electric mobility vehicle includes: a biasing member that applies a downward force to each of the swing portions when the leading end side moves upward; and a swing control portion that restrains a different-direction swing in which one of the base end sides of the pair of swing portions swings in a direction different from the other the base end sides of the pair of swing portions in the up-down direction or limits the different-direction swing to a predetermined range.

### {Brief Description of Drawings}

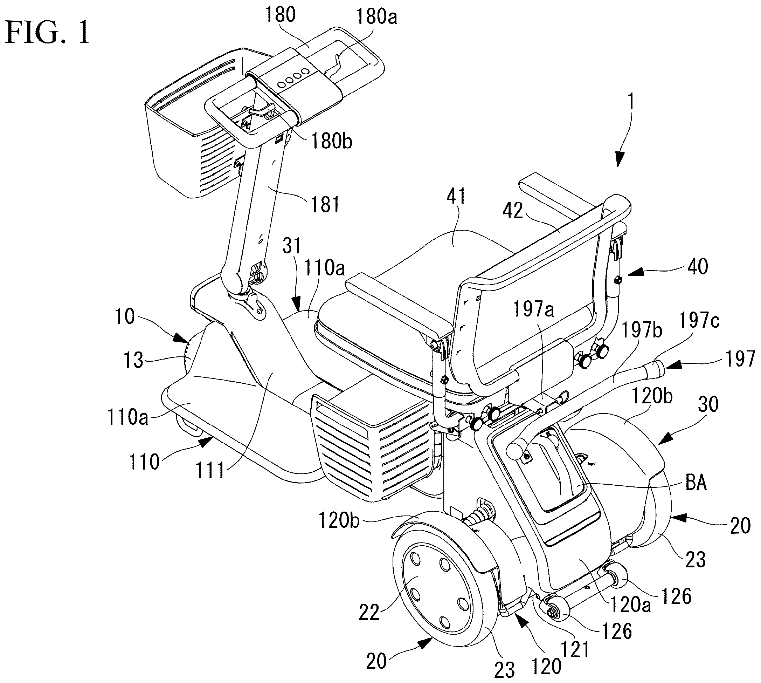

{Fig. 1}
   Fig. 1 is a rear perspective view of an electric mobility vehicle according to an embodiment.
{Fig. 2}
   Fig. 2 is a side view of the electric mobility vehicle of the present embodiment.
{Fig. 3}
   Fig. 3 is a front view of the electric mobility vehicle of the present embodiment.
{Fig. 4}
   Fig. 4 is a bottom view of the electric mobility vehicle of the present embodiment.
{Fig. 5}
   Fig. 5 is a plan view of a rear-wheel-side vehicle body of the electric mobility vehicle of the present embodiment.
{Fig. 6}
   Fig. 6 is a partial cross-sectional view of the rear-wheel-side vehicle body of the electric mobility vehicle of the present embodiment.
{Fig. 7}
   Fig. 7 is a cross-sectional view taken along the line IV-IV in Fig. 5.
{Fig. 8}
   Fig. 8 is a bottom view of the rear-wheel-side vehicle body of the electric mobility vehicle of the present embodiment.
{Fig. 9}
   Fig. 9 is a perspective view of relevant portions of the rear-wheel-side vehicle body of the electric mobility vehicle of the present embodiment.
{Fig. 10}
   Fig. 10 is a rear view of a swing base of the electric mobility vehicle of the present embodiment and a swing control portion of a first modification.
{Fig. 11}
   Fig. 11 is a perspective view of relevant portions of the rear-wheel-side vehicle body of the electric mobility vehicle of the present embodiment and the swing control portion of the first modification.
{Fig. 12}
   Fig. 12 is a rear view of the swing base of the electric mobility vehicle of the present embodiment and a swing control portion of a second modification.
{Fig. 13}
   Fig. 13 is a rear view of the swing base of the electric mobility vehicle of the present embodiment and a swing control portion of a third modification.
{Fig. 14}
   Fig. 14 is a rear view of the swing base of the electric mobility vehicle of the present embodiment and a swing control portion of a fourth modification.
{Fig. 15}
   Fig. 15 is a rear view of a swing base of a modification of the electric mobility vehicle of the present embodiment and a swing control portion of a fifth modification.
{Fig. 16}
   Fig. 16 is a rear view of a swing base of another modification of the electric mobility vehicle of the present embodiment and a swing control portion of a sixth modification.
{Fig. 17}
   Fig. 17 is a side view of a front wheel of the electric mobility vehicle of the present embodiment.
{Fig. 18}
   Fig. 18 is a cross-sectional view taken along the line XVIII-XVIII in Fig. 17.
{Fig. 19}
   Fig. 19 is a cross-sectional view taken along the line XIX-XIX in Fig. 17.
{Fig. 20}
   Fig. 20 is a diagram showing attachment of a nut to a hub component in a cross-sectional view taken along the line XX-XX in Fig. 18.
{Fig. 21}
   Fig. 21 is a rear perspective view of the electric mobility vehicle of the present embodiment.
{Fig. 22}
   Fig. 22 is a side view of a towing state of the electric mobility vehicle of the present embodiment.
{Fig. 23}
   Fig. 23 is a block diagram of a control unit of the electric mobility vehicle of the present embodiment.
{Fig. 24}
   Fig. 24 is a side view of the electric mobility vehicle of the present embodiment in a stored state.

### {Description of Embodiments}

An electric mobility vehicle 1 according to an embodiment of the present invention will be described below with reference to the drawings.

This electric mobility vehicle 1 has a mobility main body 30 as illustrated in Fig. 1 to Fig. 4. The mobility main body 30 has a front wheel 10, a pair of rear wheels (wheels) 20, and a body 31 supported by the front wheel 10 and the rear wheels 20. In addition, this electric mobility vehicle 1 has a seat unit 40 detachably attached to the mobility main body 30. The electric mobility vehicle 1 of the present embodiment is intended for one person to ride thereon sitting on the seat unit 40. Such a vehicle may be referred to as a personal mobility vehicle. In the following description, a vehicle front-to-rear direction will be simply described as a front-to-rear direction in some cases, and a vehicle width direction will be simply described as a width direction in some cases. In addition, the vehicle front-to-rear direction matches a front-to-rear direction of the mobility main body 30 or the body 31, and the vehicle width direction matches a width direction of the mobility main body 30 or the body 31. In addition, in the following description, the electric mobility vehicle 1 placed on a horizontal plane in an unloaded state or in a state in which a predetermined load is applied will be basically described. An example of the state in which a predetermined load is applied is a state in which an object or a person having an acceptable weight for the electric mobility vehicle 1 or an object or a person weighing two-thirds of the acceptable weight is on the seat unit 40.

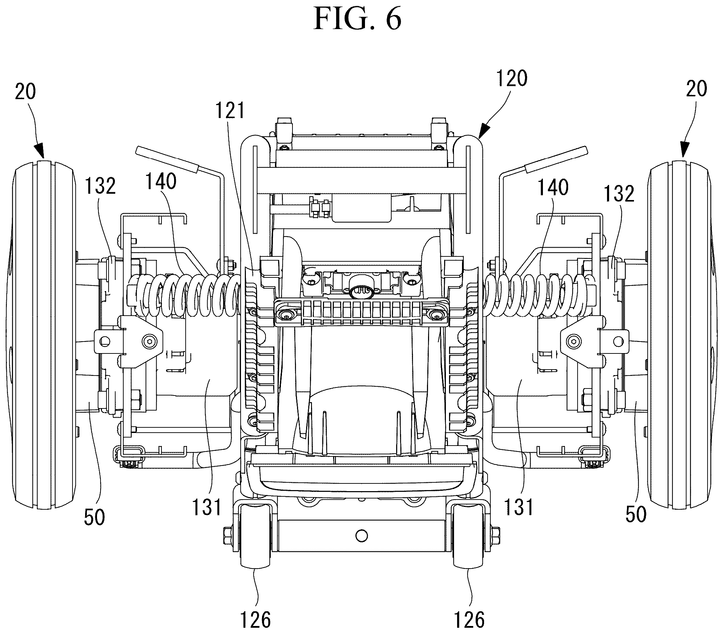

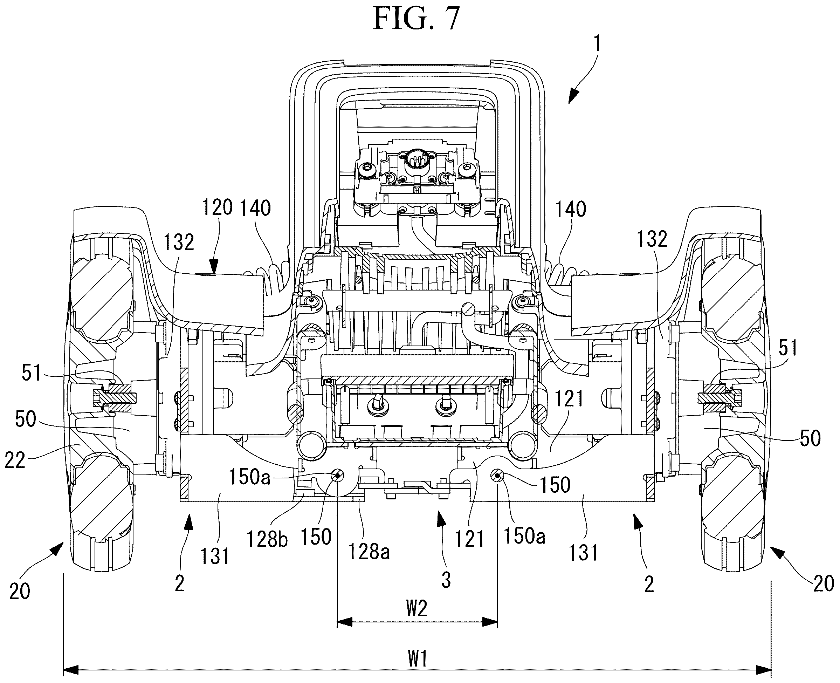

In the present embodiment, as illustrated in Fig. 6 and Fig. 7, output shafts 51 of motors 50 are respectively connected to the pair of rear wheels 20, and the two rear wheels 20 can be driven by the respective motors 50. In the present embodiment, the output shafts 51 of the motors 50 function as axles of the rear wheels 20. On the other hand, a configuration may be adopted in which driving forces of the motors 50 are transmitted to the front wheel 10 via power transmission members such as belts, gears, shafts, and the axles of the rear wheels 20.

The front wheel 10 is supported on the body 31. In the present embodiment, the front wheel 10 has hubs 12 rotatably supported on the body 31, and outer circumferential members 13 provided on outer circumferential sides of the hubs 12 and having outer circumferential surfaces formed of a material having rubber-like elasticity, such as rubber or silicon. The front wheel 10 is configured to be rotatable by means of a bearing (not illustrated) such as a wheel bearing.

In the present embodiment, each of the rear wheels 20 has an axle such as the output shaft 51 of the motor 50, a hub 22 attached to the axle, and an outer circumferential member 23 provided on an outer circumferential side of the hub 22 and having an outer circumferential surface formed of a material having rubber-like elasticity, such as rubber or silicon.

In the present embodiment, the front wheel 10 and the rear wheels 20 may be pneumatic tires, or may be solid tires which is formed of a material having rubber-like elasticity in the inside.

The mobility main body 30 has a front-wheel-side vehicle body 110 and a rear-wheel-side vehicle body 120 detachably coupled to the front-wheel-side vehicle body 110. The front-wheel-side vehicle body 110 has a front-wheel-side frame 111 whose middle portion in the front-to-rear direction and/or whose front end side is formed to extend along the ground surface and to which the axles of the front wheel 10 is attached through a front wheel suspension 160, such as a coil spring, interposed therebetween. A rear end side of the front-wheel-side frame 111 is an up-down-direction frame 111a extending upward, and the seat unit 40 is attached to its upper end side. In addition, the front-wheel-side vehicle body 110 has a front-wheel-side cover 110a. The front-wheel-side cover 110a is provided to cover at least part of the front-wheel-side frame 111 and is utilized as a protection of the front-wheel-side frame 111, a portion on which a passenger sitting on the seat unit 40 places his/her feet, a baggage placement portion, a mudguard, and the like.

The front-wheel-side frame 111 is made of a material suitable for obtaining strength, such as metal.

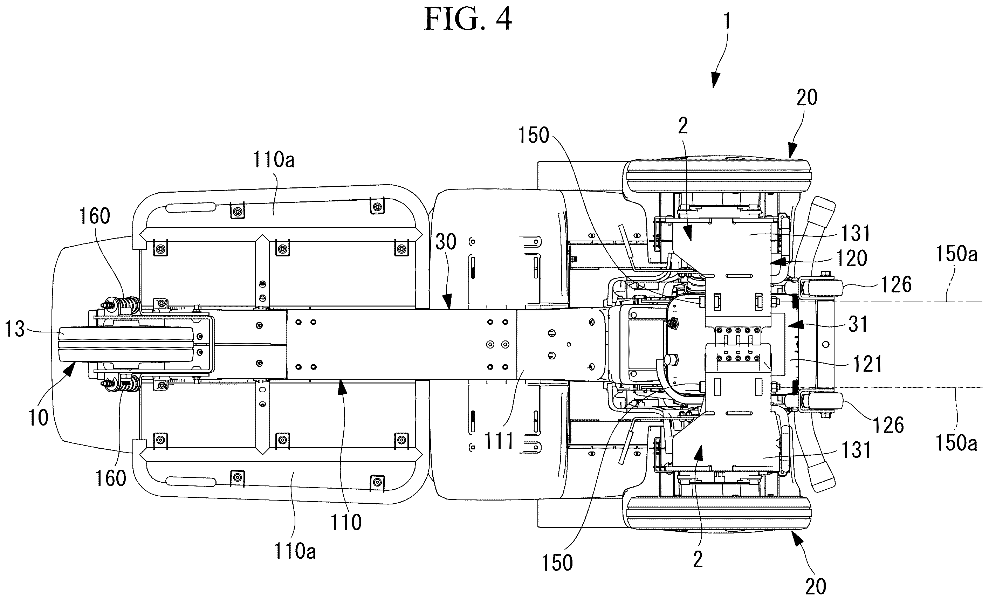

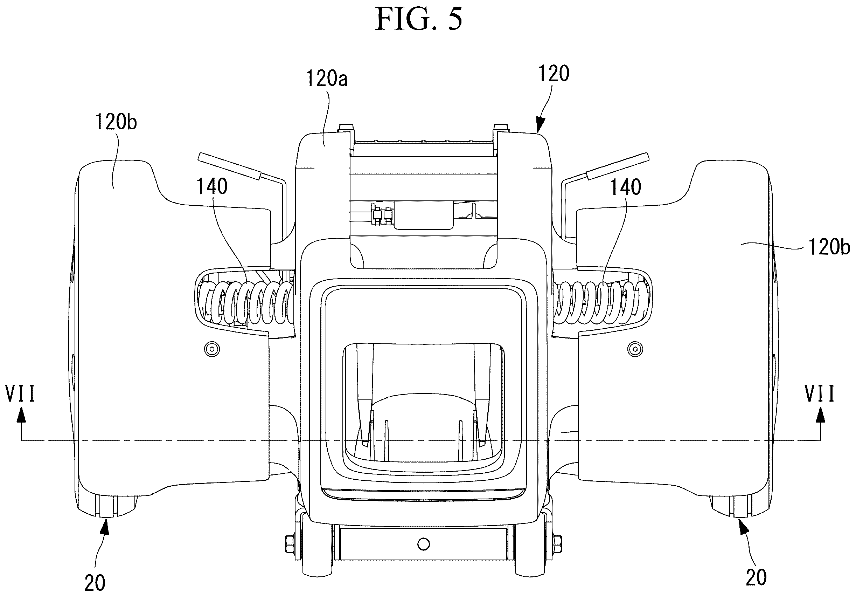

As illustrated in Fig. 1, Fig. 4, and the like, the rear-wheel-side vehicle body 120 has a rear-wheel-side frame (vehicle body frame) 121 and a rear-wheel-side cover 120a provided to cover at least part of the rear-wheel-side frame 121 and utilized as a protection for the rear-wheel-side frame 121, a mudguard, and the like (Fig. 5). An overall vehicle body frame of the mobility main body 30 is formed by the front-wheel-side frame 111 and the rear-wheel-side frame 121.

The rear-wheel-side frame 121 is made of a material suitable for obtaining strength, such as metal.

In addition, as illustrated in Fig. 1 and the like, the rear-wheel-side frame 121 is detachably provided with a pair of fall prevention members 126 arranged in the width direction for preventing the electric mobility vehicle 1 from falling to a vehicle rear side.

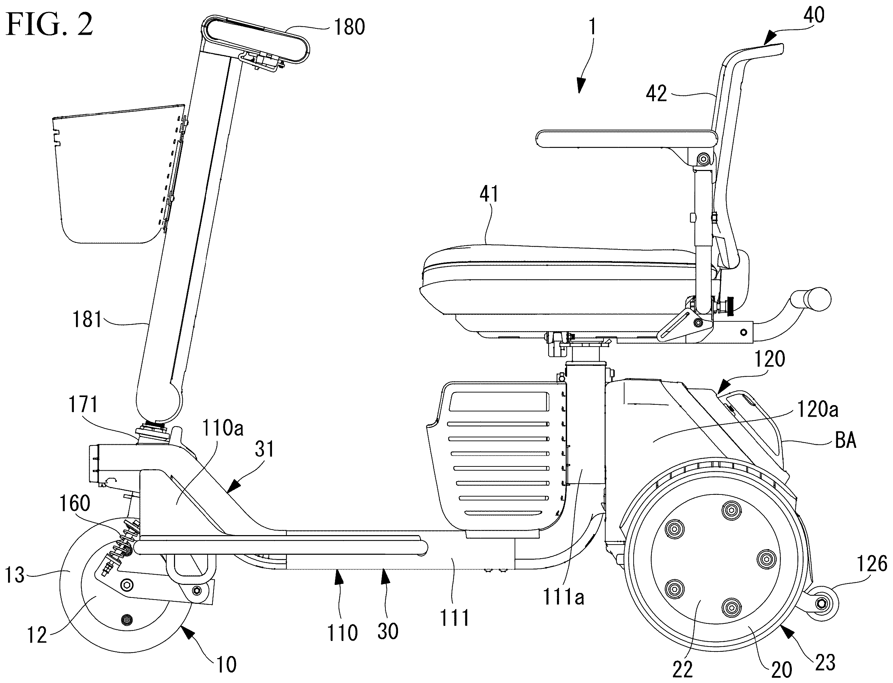

In addition, as illustrated in Fig. 1, Fig. 2, and the like, a rechargeable battery BA is detachably attached to the rear-wheel-side vehicle body 120.

The seat unit 40 has a seat surface portion 41 for a passenger to sit on and a backrest portion 42.

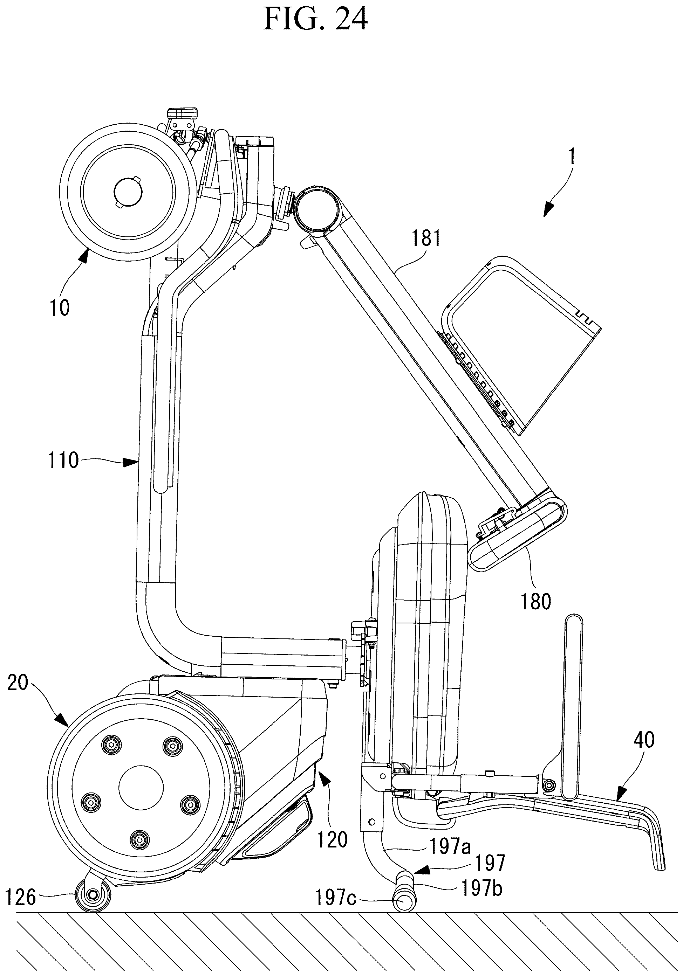

A center shaft 171 is attached to the front end side of the front-wheel-side frame 111 so as to be rotatable, and a handle shaft 181 is attached to an upper end of the center shaft 171 so as to be pivotable in the front-to-rear direction. The handle shaft 181 can be fixed at an upper tilting position illustrated in Figs. 1 to 3 and the like by an angle adjusting mechanism which is not shown in the figures and is also pivotable to a lower tilting position illustrated in Fig. 24. A handle 180 is fixed to an upper end of the handle shaft 181, and the handle includes a first operation portion 180a and a second operation portion 180b, each of which is an operation lever, button, or the like. The passenger can move the operation portions 180a, 180b to the vehicle rear side.

As shown in Fig 1, Fig. 24, and the like, a stand member 197 is attached to the rear end portion of the electric mobility vehicle 1. The stand member 197 is fixed to the seat unit 40, and has a supporting portion 197a extending backward from the seat unit 40, and a width-direction extending portion 197b whose middle portion is fixed to the supporting portion 197a and which is extending in the vehicle width direction. Both ends of the width-direction extending portion 197b are positioned rearward of the middle portion of the width-direction extending portion 197b, and slip-prevention members 197c, which are made of a material having a rubber-like elasticity, may be attached to the both ends thereof.

A user tilts the electric mobility vehicle 1 rearward, as shown in Fig. 24, using the fall prevention member 126 as a fulcrum, thereby bringing both ends of the width-direction extending portion 197b into contact with the ground, whereby the electric mobility device 1 can stand upright on its own by means of the fall prevention member 126 and the width-direction extending portion 197b. This state is useful for reducing the storage space required for the electric mobility vehicle 1. In addition, the user can place the electric mobility vehicle 1 in the storage state without needing to perform folding or other operations.

When the operation portion 180a is operated when the handle shaft 181 is not at a rotational position for a spin turn which will be described later, a control device 80 which will be described later rotates the pair of rear wheels 20 in a forward traveling direction by means of both motors 50. In addition, when the operation portion 180b is operated when the handle shaft 181 is not at the rotational position for a spin turn, the control device 80 rotates the pair of rear wheels 20 in a backward traveling direction by means of both motors 50. When the operation portion 180a or the operation portion 180b is operated when the handle shaft 181 is at the rotational position for a spin turn, the control device 80 which will be described later rotates the pair of rear wheels 20 in directions opposite to each other by means of both motors 50.

When the steering angle of the front wheel 10 is set to approximately 90° by the handle 180 and the pair of motors 50 are rotated in opposite directions, the electric mobility device 1 turns around, for example, a point located at an intermediate position or center in the width direction between the pair of rear wheels 20. In the present embodiment, such a turning motion is also referred to as spin turn.

The control device 80 is also capable of causing the electric mobility vehicle 1 to run by autonomous driving on the basis of a program without the passenger operating the handle 180, the operation portion 180a, the operation portion 180b, or the like.

A signal in accordance with an amount of displacement of the operation portion 180a, 180b is sent to a control unit 60 which will be described later, and the respective motors 50 are driven in accordance with the signal.

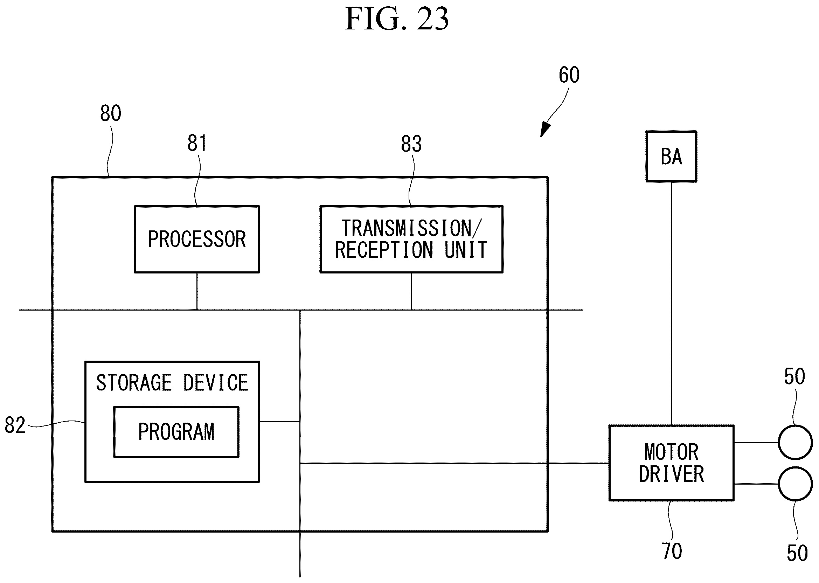

The control unit 60 has a motor driver 70 that drives the respective motors 50, and the control device 80 as illustrated in Fig. 23.

The control device 80 has a processor 81 having a CPU, RAM, and the like, for example, a storage device 82 having a non-volatile memory, a ROM, or the like, and a transmission/reception unit 83. The storage device 82 stores a program for controlling the electric mobility vehicle 1, and the processor 81 is operated on the basis of the program and sends a driving signal for driving the respective motors 50 to the motor driver 70.

In the present embodiment, the front-wheel-side vehicle body 110 and the rear-wheel-side vehicle body 120 are detachably connected to each other; however, the front-wheel-side vehicle body 110 and the rear-wheel-side vehicle body 120 may also be integrally formed.

The respective rear wheels 20 are attached to the rear-wheel-side vehicle body 120 through rear-wheel suspensions interposed therebetween. As illustrated in Fig. 7, the rear-wheel suspensions each have a swing base 131, and a spring 140 made of metal such as steel. The swing base 131 is formed by using a material suitable for obtaining strength, such as aluminum or another metal material. Part of the swing base 131 may be plastic. The electric mobility vehicle 1 of the present embodiment has a swing portion 2 including the swing base 131 and the motors 50 fixed to the swing base 131. The swing portion 2 is a portion that swings together with the swing base 131. The swing portion 2 may include still another component.

A base end side of the swing base 131 is attached to the rear-wheel-side frame 121 of the rear-wheel-side vehicle body 120 so as to be swingable in the up-down direction, and when the swing base 131 swings, a leading end of the swing base 131 moves in the up-down direction. The base end side of the swing base 131 is located at a center side in the width direction of a lower surface of the rear-wheel-side frame 121, and a leading end portion of the swing base 131 is located on an outer side in the width direction relative to the rear-wheel-side frame 121. In the present embodiment, a base end, a base end portion, and a base end side of the swing portion 2 are the base end, the base end portion, and the base end side of the swing base 131, and a leading end, a leading end portion, and a leading end side of the swing portion 2 are the leading end, the leading end portion, and the leading end side of the swing base 131.

More specifically, a pair of shaft supporting portions are provided on the lower surface of the rear-wheel-side frame 121, and each of the shaft supporting portions is provided with a through-hole extending in the front-to-rear direction. On the other hand, a shaft 150 extending in the front-to-rear direction is fixed to the base end side of the swing base 131 as illustrated in Fig. 4.

A bearing such as a sliding bearing is provided between the shaft 150 and the shaft supporting portion.

With the above-described configuration, the swing base 131 swings about a swing axis 150a (Figs. 4, 7, and the like) which is the center axis of the shaft 150.

Note that the shaft supporting portions may be provided on the base end side of the swing base 131, and the shaft 150 may be fixed to the lower surface of the rear-wheel-side frame 121.

As illustrated in Fig. 6 and Fig. 7, a rear-wheel supporting member 132 is provided on the leading end portion of the swing base 131. The rear-wheel supporting member 132 is a member provided on the leading end portion of the swing base 131. In addition, in the present embodiment, the swing base 131 and the rear-wheel supporting member 132 are formed integrally by subjecting a steel plate to pressing (such as bending or cutting), welding, or the like. In the case in which the rear-wheel supporting member 132 is fixed to the swing base 131, the rear-wheel supporting member 132 is part of the swing base 131. As illustrated in Fig. 6 and Fig. 7, the rear-wheel supporting member 132 extends upward from the leading end portion of the swing base 131, and in the present embodiment, a housing of the motor 50 is fixed to the rear-wheel supporting member 132 with a plurality of bolts.

The hub 22 of the rear wheel 20 is fixed to the output shaft 51 of the motor 50. The motor 50 and the rear wheel 20 are thereby supported on the leading end portion of the swing base 131.

In other words, the rear-wheel supporting member 132 supports the rear wheel 20 on the swing base 131 with the motor 50 interposed therebetween. Another mechanical element such as a bearing, an axle, another member, and the like may be fixed to the rear-wheel supporting member 132, so that the rear-wheel supporting member 132 may support the rear wheel 20 with the other mechanical element, the axle, the other member, and the like interposed therebetween.

In addition, there may be a case in which the housing of the motor 50 or the like is fixed to the leading end portion, an intermediate portion, or the like of the swing base 131. In this case, the rear wheel 20 is supported on the swing base 131 with the motor 50 interposed therebetween without providing the rear-wheel supporting member 132. In addition, another mechanical element such as a bearing, an axle, another member, and the like may be fixed to the leading end portion of the swing base 131, so that the leading end portion of the swing base 131 may support the rear wheel 20 with the other mechanical element, the axle, the other member, and the like interposed therebetween.

In any of the above-described cases, the rear wheel 20 is located on the leading end side of the swing base 131 and is supported on the swing base 131 so as to move in the up-down direction together with the leading end side of the swing base 131.

As illustrated in Fig. 7, stopper portions 128a, 128b are provided on the rear-wheel-side frame 121 and/or the swing base 131, and when the leading end portion of the swing base 131 moves downward, the base end portion of the swing base 131 abuts on the rear-wheel-side frame 121 from below with the stopper portion 128a interposed therebetween. The position will be a lower-limit swing position of the swing base 131.

On the other hand, when the leading end portion of the swing base 131 moves upward, the base end portion of the swing base 131 abuts on the rear-wheel-side frame 121 from below with the stopper portion 128b interposed therebetween. The position will be an upper-limit swing position of the swing base 131.

Note that there may be a case in which when the leading end portion of the swing base 131 swings downward, downward or upward swing of the swing base 131 is stopped by a force from the spring 140 without the base end portion of the swing base 131 abutting on the rear-wheel-side frame 121 or the like. In this case, a position at which the downward or upward swing of the swing base 131 is stopped by support of the spring 140 will be the lower-limit swing position or the upper-limit swing position.

A rear-wheel width W1 (Fig. 7) which is a distance in the width direction between an outer end of one of the rear wheels 20 and an outer end of the other rear wheel 20 and which is 450 to 650 mm in one example. In the present embodiment, the rear-wheel width W1 is 530 to 550 mm. In contrast to this, a swing axis width W2 (Fig. 7) which is a distance in the width direction between one of the swing axes 150a and the other swing axis 150a and which is 50 to 200 mm in one example. In the present embodiment, the swing axis width W2 is less than or equal to 120 to 130 mm.

Then, in the present embodiment, a distance from the swing axis 150a to the outer end of the rear wheel 20 is approximately 210 mm, and when the swing base 131 swings from the upper-limit swing position to the lower-limit swing position, the rear wheel 20 moves in the up-down direction by more than or equal to 25 mm. In order to improve comfortability of a passenger, the rear wheel 20 preferably is configured to move in the up-down direction by more than or equal to 15 mm relative to the vehicle body frame and more preferably moves by more than or equal to 20 mm, but they are not limited to those numerical values and a necessary suspension function should only be achieved.

As illustrated in Fig. 6, one end of the spring 140 is attached to the leading end portion of the swing base 131. In the present embodiment, the one end of the spring 140 is attached to the leading end portion of the swing base 131 with the rear-wheel supporting member 132 interposed therebetween. Note that the one end of the spring 140 may be attached to another portion of the swing base 131.

On the other hand, the other end of the spring 140 is attached to the rear-wheel-side frame 121.

In the present embodiment, 20° or less is made by a direction in which the spring 140 extends with a width horizontal direction line. In one example, the width horizontal direction line is parallel to a straight line passing through a center point of the axle of one of the rear wheels 20 and a center point of the axle of the other rear wheel 20. In another example, the width horizontal direction line is parallel to a straight line passing through a center point in a radial direction of the axle of the front wheel 10 and a center point of the axle of the other front wheel 10.

The direction in which the spring 140 extends is, in one example, a straight line passing through the center in the radial direction of one end of the spring 140 and the center in the radial direction of the other end.

For example, the angle is set in a range of 5° to 20°. If the aforementioned angle is less than or equal to 50°, a function may be similar to that of a case in which the aforementioned angle is 20°.

In addition, a publicly-known nonlinear spring preferably is used as the spring 140. In one example of the nonlinear spring, a winding pitch differs between one end side and the other end side thereof, and accordingly, a spring rate when compression progresses is higher than that at the start of compression. Another type of nonlinear spring may be used.

As described above, in the present embodiment, the spring 140 extends toward the vehicle width direction and extends diagonally downward from the inner side toward the outer side in the vehicle width direction.

When a force from a lower side is applied to each of the rear wheels 20 to move each of the rear wheels 20 upward relative to the rear-wheel-side frame 121, each of the springs 140 is compressed. At this time, a ratio of a force component in the horizontal direction to a force component in the up-down direction increases in a force applied from the other end of each of the springs 140 to the rear-wheel-side frame 121 since the springs 140 are located as described above. In other words, a force in the up-down direction is difficult to transmit from each of the springs 140 to the rear-wheel-side frame 121. Note that a damper located in parallel to the spring 140 can further be provided. In one example, a publicly-known damper such as an oil damper may be located in the spring 140. In another example, another biasing member such as an air cylinder may be provided instead of the spring (biasing member) 140. In this case, a biasing system having an air cylinder capable of supplying air to each of a base end side and a leading end side of a cylinder portion, a pump that supplies air to the cylinder portion, electronically controlled valves respectively provided on the base end side and the leading end side of the cylinder portion, and a control device can be employed. When the pump and the electronically controlled valves are controlled by the control device, an appropriate suspension function in accordance with the weight of the passenger can be achieved. The biasing member should only be a member that can apply a downward force to the swing portion 2 when the leading end side of the swing portion 2 moves upward.

The electric mobility vehicle 1 is required to be compact, lightweight, simple in structure, and durable, for example. Therefore, a space in which the suspensions, the springs, the dampers, and the like can be located is relatively small, so that the suspensions, the springs, the dampers, and the like cannot be enlarged in many cases. The above-described configuration is useful for effectively buffering a force from the lower side to be applied to the rear wheels 20 in a limited space.

Note that the force from the lower side is a force that the rear wheels 20 receive from a contact surface when a passenger rides on the seat unit 40, a force that the rear wheels 20 receive from irregularities of the ground surface when the electric mobility vehicle 1 runs, or the like.

In addition, in the present embodiment, the swing base 131 of the swing portion 2 extends from the swing axis 150a to the outer side in the vehicle width direction and extends from the swing axis 150a substantially toward the horizontal direction. In the present embodiment, when an angle made by a direction in which the swing base 131 or the swing portion 2 extends in the vehicle width direction with the horizontal direction is less than or equal to 35°, it can be said that the swing base 131 extends from the swing axis 150a substantially toward the horizontal direction. The aforementioned angle preferably is less than or equal to 25°, more preferably is less than or equal to 10°, and still more preferably is less than or equal to 5°.

Note that in one example, the direction in which the swing base 131 (the swing portion 2) extends is a direction passing through the center of the figure of a cross-section of the base end portion of the swing base 131 and the center of the figure of a cross-section of the leading end portion of the swing base 131. Each of the cross-sections is a cross-section obtained by cutting the swing base 131 along a plane extending in the vehicle front-to-rear direction and the up-down direction. In another example, the direction in which the swing base 131 extends is a direction in which a lower surface or an upper surface of the swing base 131 substantially extends.

In the present embodiment, the swing base 131 extends from the swing axis 150a slightly downward relative to the horizontal direction in a state in which a passenger has not ridden on the seat unit 40. Then, when the passenger rides on the seat unit 40, a state is obtained in which the swing base 131 swings upward against a reaction force of the springs 140, and the swing base 131 extends from the swing axis 150a slightly upward relative to the horizontal direction. In a case in which the passenger is lightweight, the swing base 131 becomes a state of extending from the swing axis 150a toward the horizontal direction or a state of extending slightly downward relative to the horizontal direction.

In this state, one end of the spring 140 is attached to the leading end portion of the swing base 131 with the rear-wheel supporting member 132 interposed therebetween, and the spring 140 extends toward the vehicle width direction as described above. Therefore, as the swing position of the swing base 131 approaches the upper-limit swing position, an amount of compression of the spring 140 relative to a unit swing amount of the swing base 131 increases. With this configuration, when a lightweight passenger rides, the amount of compression of the spring 140 relative to the unit swing amount of the swing base 131 is smaller than a case when a heavyweight passenger rides.

In addition, the spring 140 may be a nonlinear spring whose spring rate increases when compression progresses. In one example, the spring 140 is a nonlinear spring whose increased spring rate is more than or equal to 1.3 times and preferably is more than or equal to 1.5 times a spring rate before increasing.

In other words, the spring rate of the overall rear-wheel suspension changes in accordance with the weight of the passenger. Note that the effect in which the spring rate of the overall rear-wheel suspension changes in accordance with the weight of the passenger is obtained only by the configuration in which the spring 140 is a nonlinear spring.

As described above, since the spring rate of the overall rear-wheel suspension changes in accordance with the weight of the passenger, the swing base 131 is prevented from swing excessively when a heavyweight passenger rides. Such a configuration in which the spring rate changes in accordance with the weight provides a vibration-reduction effect and also contributes to the protection of each frame of the mobility body. Furthermore, when the electric mobility vehicle 1 pivots or turns, a great force is applied to the spring 140 of one of the pair of rear wheels 20. Here, the spring rate of the spring 140 becomes high when a great force is applied. For example, the spring rate is not increased when the electric mobility vehicle 1 is at a still state with a lightweight passenger riding thereon or traveling straight with the lightweight passenger riding thereon, and the spring rate of the rear-wheel suspension on the outer side increases when the electric mobility vehicle 1 pivots or turns. Therefore, a roll angle at the time of a pivot or turn is reduced, and the posture of the electric mobility vehicle 1 and the passenger becomes more stable.

In addition, in the present embodiment, the swing control portion 3 is provided to restrains or limit different direction motions in the up-down direction of the base end sides of the pair of swing portions 2, thereby restraining a rise of the leading end side of one of the pair of swing portions 2 relative to the other leading end side or limiting the rise to a predetermined range.

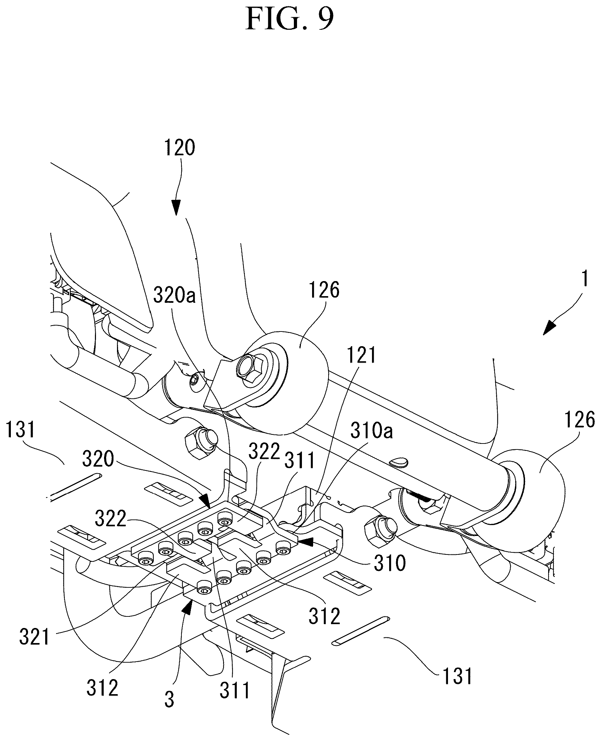

The swing control portion 3 of the present embodiment has a first member 310 and a second member 320 made using metal, rigid plastic, or the like as illustrated in Fig. 9 and the like. More preferably, the first member 310 and the second member 320 are formed using a spring material such as stainless steel or spring steel for use in manufacturing a spring such as a coil spring.

The first member 310 has a main body 310a fixed to the base end portion of one of the pair of swing bases 131 (right side one) with a bolt or the like, and the second member 320 has a main body 320a fixed to the base end portion of the other one of the pair of swing bases 131(left side one) with a bolt or the like.

The first member 310 has two or more upper contact portions 311 located at intervals from each other in the vehicle front-to-rear direction and two or more lower contact portions 312 located at intervals from each other in the vehicle front-to-rear direction.

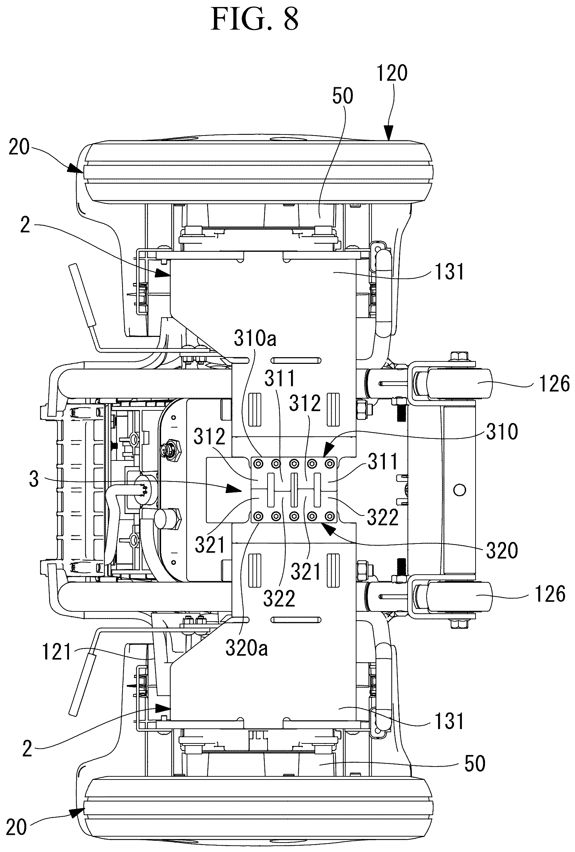

In the present embodiment, the respective contact portions 311, 312 extend from the main body 310a toward the inner side in the vehicle width direction, and the respective contact portions 311, 312 are fixed to the main body 310a. Alternatively, the respective contact portions 311, 312 are formed integrally with the main body 310a. As illustrated in Figs. 8, 9, and the like, the two or more upper contact portions 311 and the two or more lower contact portions 312 are aligned alternately in the vehicle front-to-rear direction. The two or more upper contact portions 311 are located above the two or more lower contact portions 312.

In addition, the second member 320 has two or more upper contact portions 321 located at intervals from each other in the vehicle front-to-rear direction and two or more lower contact portions 322 located at intervals from each other in the vehicle front-to-rear direction.

In addition, the respective contact portions 321, 322 extend from the main body 320a toward the inner side in the vehicle width direction, and the respective contact portions 321, 322 are fixed to the main body 320a. Alternatively, the respective contact portions 321, 322 are formed integrally with the main body 320a. As illustrated in Figs. 8, 9, and the like, the two or more upper contact portions 321 and the two or more lower contact portions 322 are aligned alternately in the vehicle front-to-rear direction. The two or more upper contact portions 321 are located above the two or more lower contact portions 322.

The first member 310 and the second member 320 are respectively fixed to the pair of swing bases 131 (Fig. 9) such that the two or more upper contact portions 311 of the first member 310 and the two or more lower contact portions 322 of the second member 320 are aligned in the up-down direction and such that the two or more lower contact portions 312 of the first member 310 and the two or more upper contact portions 321 of the second member 320 are aligned in the up-down direction. When the left and right rear wheels 20 which are movable in the up-down direction are located at equivalent height positions relative to the vehicle body frame as described above, that is, when the leading end sides of the pair of swing bases 131 (the swing portions 2) are located at equivalent height positions relative to the vehicle body frame, the first member 310 and the second member 320 do not come into contact, or the first member 310 and the second member 320 are in light contact in a state in which they are not engaged with each other in the up-down direction. The leading end sides of the swing bases 131 (the swing portions 2) are specific portions of the leading ends of the swing bases 131, for example.

Here, the height positions can be measured relative to a reference plane (reference height position) based on a reference element, reference shape, reference position, and the like of the rear-wheel-side vehicle body 120. The reference element is, for example, part or the whole of the lower surface of the rear-wheel-side frame 121 in the vehicle body frame, the pair of fall prevention members 126, their center axes, or the like. The reference shape is, for example, one or more characteristics shapes in the rear-wheel-side frame 121. The reference position is, for example, a height position of the specific portions of the rear wheels 20 or the swing bases 131 relative to the vehicle body frame, measured in the electric mobility vehicle 1 to which any load is not applied and which is in a still state.

For example, in the case of the reference element, the reference plane (reference height position) can be set with reference to one or more grooves, protrusions, planes, or the like extending horizontally in the vehicle width direction of the lower surface of the rear-wheel-side frame 121 or holes, grooves, protrusions, planes, or the like aligned in the vehicle width direction of the lower surface of the rear-wheel-side frame 121. Setting can also be performed similarly in the cases of the reference shape and the reference position.

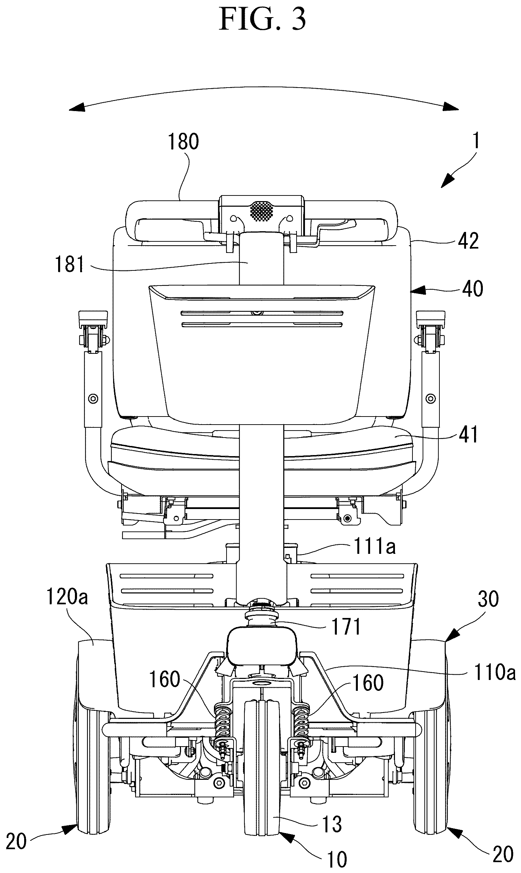

There are cases in which a centrifugal force works on the electric mobility vehicle 1 when the electric mobility vehicle 1 makes a pivot or turn, and a large load is applied to the rear wheel 20 on the outer side of the pivot or turn, of the pair of rear wheels 20. In this case, a behavior tilting to the outer side of the pivot or turn occurs in the electric mobility vehicle 1 as indicated by an arrow illustrated in Fig. 3. The behavior is referred to as rolling in some cases. The tilting behavior occurs also when the passenger places his/her weight on one side in the vehicle width direction. For example, the passenger sitting on the electric mobility vehicle 1 at a stop state may place his/her weight on one side in the vehicle width direction in order to take an article present beside the electric mobility vehicle 1.

In addition, the tilting behavior also occurs when the passenger places his/her weight on one side in the vehicle width direction while standing on the footrest.

In the case in which soft rear-wheel suspensions are used for improving comfortability of the passenger as described above, the tilting behavior is likely to occur.

The tilting behavior can also be said to be a behavior in a rotational direction about an axis extending in the vehicle front-to-rear direction.

In the present embodiment, the height position of the leading end side of one of the pair of swing portions 2 becomes higher than the height position of the leading end side of the other swing portion 2 due to the tilting behavior. For example, when a difference between the two height positions reaches 10 mm which is a predetermined difference, the two or more upper contact portions 311 and the two or more lower contact portions 322 come into contact in the up-down direction. At this time, in the present embodiment, the two or more lower contact portions 312 of the first member 310 and the two or more upper contact portions 321 of the second member 320 also come into contact in the up-down direction. The contact limits movement of the first member 310 and the second member 320 relative to each other in the up-down direction. In other words, the difference between the height position of the leading end side of one of the pair of swing portions 2 and the height position of the leading end side of the other swing portion 2 is restrained or limited from increasing beyond the predetermined difference. More specifically, the difference between the height position of the leading end side of one of the pair of swing portions 2 and the height position of the other leading end side is limited to a predetermined range of 10 mm.

The predetermined range can be set as appropriate. A specific numerical value varies in accordance with the size of the electric mobility vehicle 1 or the like. When the predetermined range is set at a relatively small range of 2 to 10 mm, for example, the electric mobility vehicle 1 is less likely to roll. When the predetermined range is set at a relatively large range exceeding 10 mm, flexibility of the motion of tilting the electric mobility vehicle 1 when making a turn increases.

The configuration can reduce the tilting behavior while achieving soft rear-wheel suspensions for improving comfortability of the passenger as described above. This also leads to a rise in running performance of the electric mobility vehicle 1 and also leads to further improvement of comfortability of the passenger.

Note that in the case in which the first member 310 and the second member 320 are formed using a spring material as described above, a configuration can be employed in which the upper contact portions 311 and/or the lower contact portion 322 can be deformed within a range of elastic deformation in accordance with a force applied to a contact portion of the upper contact portions 311 and the lower contact portion 322 in the up-down direction when the upper contact portions 311 and the lower contact portion 322 come into contact in the up-down direction. In this case, a force of SOON, 1000N, or the like is applied to the contact portion in the up-down direction, for example, and leading ends of the upper contact portions 311 and/or leading ends of the lower contact portion 322 can be displaced accordingly by more than or equal to 0.3 mm, more than or equal to 0.5 mm, or more than or equal to 1 mm in the up-down direction. With the configuration, it is expected that limit of displacement of the swing portion 2 is relaxed and that the members 310, 320 are less likely to collapse (less likely to permanently set).

Note that the first member 310 may be provided with a single upper contact portion 311 and a single lower contact portion 312, and the second member 320 may be provided with a single upper contact portion 321 and a single lower contact portion 322. Also in this case, functions and effects described above may be similarly achieved.

In addition, the second member 320, for example, can be omitted, and the above-described effects can also be achieved only with the first member 310. In this case, part of the base end portion of the other swing base 131 is located below the two or more upper contact portions 311 of the first member 310 fixed to the base end portion of one of the swing bases 131. In addition, part of the base end portion of the other swing base 131 is located above the two or more lower contact portions 312 of the first member 310. When the part of the base end portion functions similarly to the second member 320, the above-described effects are achieved.

Part or the whole of the first member 310 and the second member 320 can be part of the base end portions of the swing bases 131. For example, the upper contact portions 311 and the lower contact portions 312 may be provided integrally on the base end side of one of the swing bases 131, and the upper contact portions 321 and the lower contact portion 322 may be provided integrally on the base end side of the other swing base 131.

Alternatively, a hole or notch may be formed in the base end side of one of the swing bases 131, and a protruding portion inserted in the hole or notch may be formed on the base end side of the other swing base 131. An upper end surface of the hole or notch functions as an upper contact portion that comes into contact with the protruding portion from above, and a lower end surface of the hole or notch functions as a lower contact portion that comes into contact with the protruding portion from below.

As described above, in order to limit different-direction swing in which the base end side of one of the pair of swing portions 2 swings in a direction different from the other in the up-down direction, the base end side of at least one of the swing portions 2 should only be provided with an upper contact portion that comes into contact with the base end side of the other swing portion 2 from above and a lower contact portion that comes into contact therewith from below.

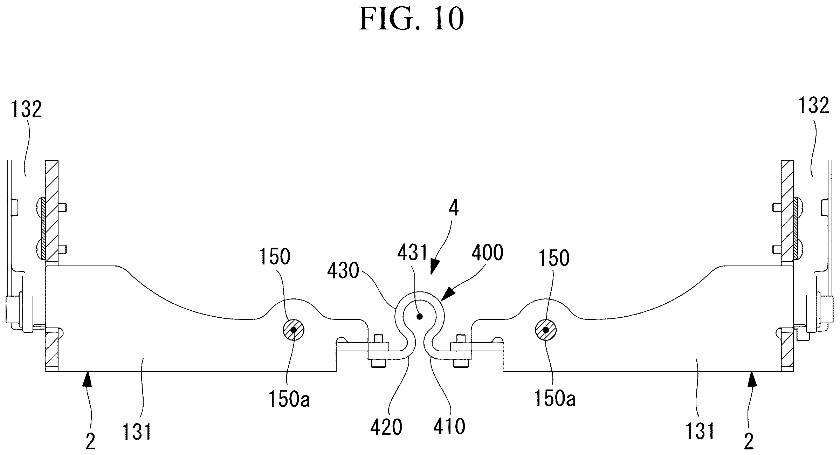

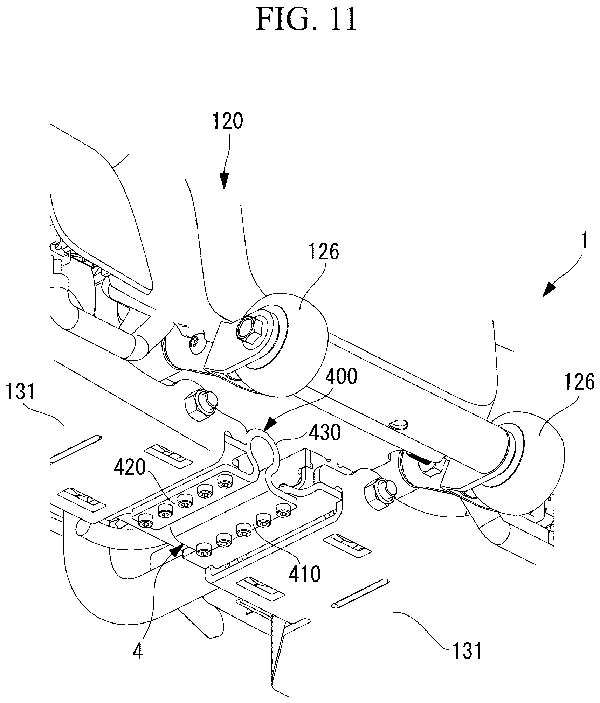

A swing control portion 4 illustrated in Figs. 10 and 11 can also be used instead of the swing control portion 3 of the present embodiment described above.

The swing control portion 4 has a connecting member 400 having a first fixed portion 410 fixed to the base end side of one of the pair of swing bases 131 with bolts or the like and a second fixed portion 420 fixed to the base end side of the other one of the pair of swing bases 131 with bolts or the like. The swing control portion 4 may have another member in addition to the connecting member 400.

The connecting member 400 has a force generating portion 430 made of metal, rigid plastic, or the like that connects the first fixed portion 410 and the second fixed portion 420. The force generating portion 430 has an elastically deformable shape. One end of the force generating portion 430 is a portion coupled to the first fixed portion 410, and the other end of the force generating portion 430 is a portion coupled to the second fixed portion 420.

One example of the elastically deformable shape is a shape located across a range of more than or equal to 170° about an axis 431 extending in the vehicle front-to-rear direction as in Fig. 10. The axis 431 is located within a range surrounded by the force generating portion 430 and extends in the vehicle front-to-rear direction. Therefore, the elastically deformable shape is usually a shape located across a range of more than or equal to 180° about the axis 431.

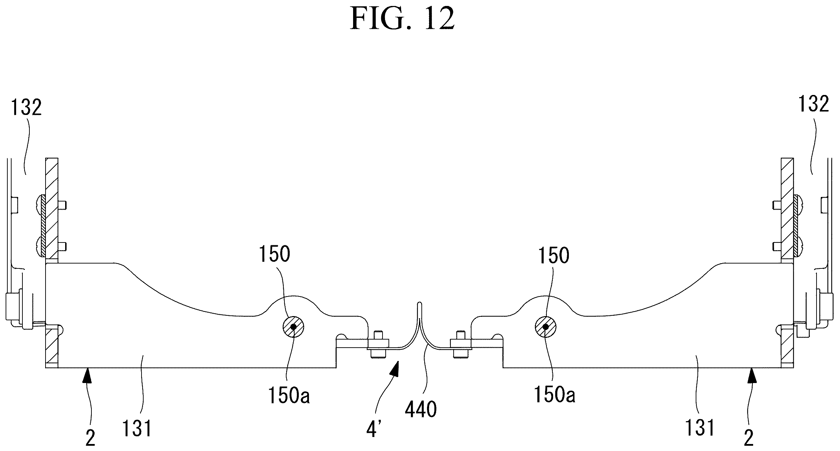

As a cross-sectional shape of the force generating portion 430, various shapes such as, for example, a shape made from a single arc, a shape obtained by connecting two or more arcs, a shape obtained by connecting one or more arcs and one or more straight lines, and the like, a shape obtained by removing a partial side of a polygon, and the like may be employed. The cross-sectional shape is a shape of a cross-section obtained by cutting the force generating portion 430 along a plane perpendicular to the vehicle front-to-rear direction. Part or the whole of the arc may be an arc having a center of curvature outside the force generating portion 430. The force generating portion 430 in Fig. 10 has a cross-sectional shape obtained by connecting two or more arcs. In addition, the force generating portion 440 in Fig. 12, which is a swing control portion 4', of a modification has a cross-sectional shape obtained by connecting two or more arcs having centers of curvature outside the force generating portion 440.

Since the force generating portions 430, 440 have the above-described configurations, first deformation in which one end and the other end of the force generating portion 430, 440 are displaced from each other in the horizontal direction occurs, when same-direction swing in which the base end sides of the pair of swing bases 131 swings together upward or downward occurs. As described, when the same-direction swing in which the pair of swing bases 131 swing in the same direction occurs, the force generating portion 430, 440 having the above-described shape applies a relatively small reaction force to the base end sides of the pair of swing bases 131.

On the other hand, when the different-direction swing in which the base end side of one of the pair of swing bases 131 swings upward or downward relative to the other base end side occurs, second deformation in which one end and the other end of the force generating portion 430, 440 are displaced from each other in the up-down direction occurs. As described, the force generating portion 430, 440 is deformed in a mode different from that of the same-direction swing. In the present embodiment, when compared with a ratio (a first spring constant; first ratio) of a force from the force generating portion 430, 440 to an amount of deformation in the first deformation in the same-direction swing, a ratio (a second spring constant; second ratio) of a force from the force generating portion 430, 440 to an amount of deformation in the second deformation in the different-direction swing is at least three times greater and more preferably is at least five times greater. The ratio should only be more than or equal to 1.5 times. The ratio of the second spring constant to the first spring constant is not limited to the above value, as long as it can reduce the tilting behavior as described above. The same applies to the following description.

Therefore, the swing control portion 4, 4' restrains the different-direction swing in which one of the base end sides of the pair of swing portions 2 swings in a direction different from the other in the up-down direction. The configuration can restrain or limit the difference between the height position of the leading end side of one of the pair of swing portions 2 relative to the vehicle body frame and the height position of the other leading end side relative to the vehicle body frame from increasing beyond the predetermined range. In the case of restraint, the force generating portion 430, 440 generates a sufficiently great force before the difference exceeds the predetermined range, and the difference is less likely to exceed the predetermined range accordingly. The same applies to the case of another force generating portion.

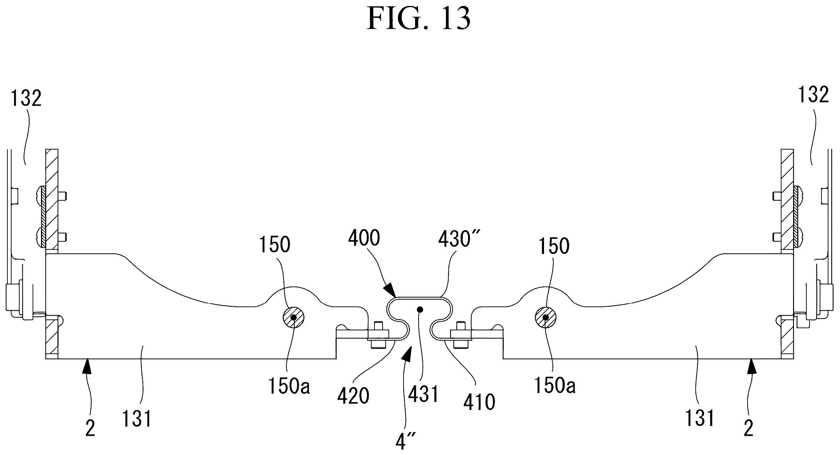

A swing control portion 4" illustrated in Fig. 13 obtained by changing the shape of the force generating portion 430 of the swing control portion 4 of the present embodiment can also be used.

The swing control portion 4" also has a force generating portion 430" having an elastically deformable shape. The force generating portion 430" also has a shape located across a range of more than or equal to 170° about the axis 431 and has a cross-sectional shape obtained by connecting two or more arcs.

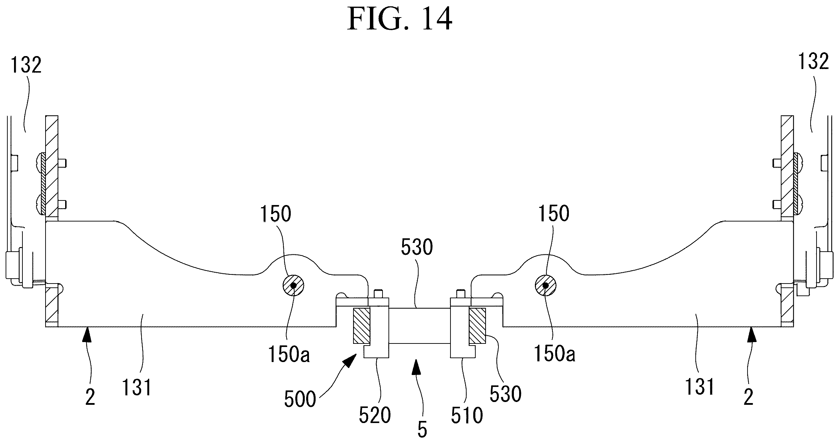

A swing control portion 5 illustrated in Fig. 14 can also be used instead of the swing control portion 3 of the present embodiment.

The swing control portion 5 has a connecting member 500 having a first fixed portion 510 fixed to the base end side of one of the pair of swing bases 131 with a bolt or the like and a second fixed portion 520 fixed to the base end side of the other one of the pair of swing bases 131 with a bolt or the like. The swing control portion 5 may have another member in addition to the connecting member 500.

The connecting member 500 has a force generating portion 530 made of a threadlike member, string-like member, band-like member, or the like that connects the first fixed portion 510 and the second fixed portion 520. The force generating portion 530 of the present embodiment is made by winding a thread made of polyester fibers, nylon fibers, aramid fibers, or the like around the first fixed portion 510 and the second fixed portion 520 by a plurality of times. The threadlike member and the string-like member can be made using chemical fibers such as polyester fibers, nylon fibers, or aramid fibers, natural fibers, metal fibers, or the like. The band-like member can be made using metal, plastic, rubber, or the like. The force generating portion 530 of the present embodiment may have rubber-like elasticity that covers the force generating portion 530.

Since the connecting member 500 has the above-described configuration, first deformation in which the first fixed portion 510 side and the second fixed portion 520 side of the force generating portion 530 are displaced from each other in the horizontal direction occurs in the force generating portion 530 in the same-direction swing. The length of the force generating portion 530 between the first fixed portion 510 and the second fixed portion 520 is set such that a strong tension is not produced in the deformation.

On the other hand, in the different-direction swing, second deformation in which the first fixed portion 510 side and the second fixed portion 520 side of the force generating portion 530 are displaced from each other in the up-down direction occurs in the force generating portion 530. In the present embodiment, a ratio (the second spring constant; second ratio) of a force (tension) from the force generating portion 530 to an amount of deformation in the second deformation in the different-direction swing is at least three times greater and more preferably is at least five times greater than a ratio (the first spring constant; first ratio) of a force (tension) from the force generating portion 530 to an amount of deformation in the first deformation in the same-direction swing. The ratio should only be more than or equal to 1.5 times. The ratio is not limited to these values as described above. Note that the amount of deformation can also be said to be an amount of displacement (a change in distance) of the first fixed portion 510 relative to the second fixed portion 520.

Therefore, the swing control portion 5 restrains or limits the different-direction swing in which one of the base end sides of the pair of swing portions 2 swings in a direction different from the other in the up-down direction. The configuration restrains or limits the difference between the height position of the leading end side of one of the pair of swing portions 2 relative to the vehicle body frame and the height position of the other leading end side relative to the vehicle body frame from increasing beyond the predetermined difference.

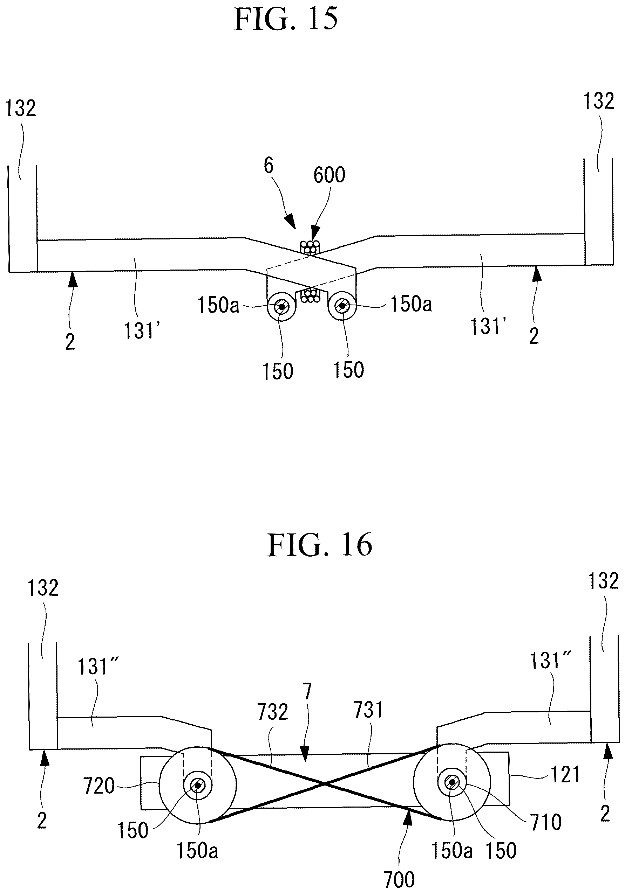

Swing bases 131' in Fig. 15 can also be provided with a swing control portion 6. Configurations equivalent to those of the above-described embodiment are denoted by the same reference numerals in Fig. 15. In Fig. 15, the shaft 150 fixed to a base end side of the right swing base 131' is located on the left side relative to the shaft 150 fixed to a base end side of the left swing base 131'.

The swing control portion 6 has a connecting member 600 that connects the base end side of the right swing base 131' and the base end side of the left swing base 131'. The swing control portion 6 may have another member in addition to the connecting member 600.

The connecting member 600 can also be said to be a force generating portion made of a threadlike member, a string-like member, a band-like member, or the like that connects the base end side of the right swing base 131' and the left swing base 131'. The force generating portion can be made of a material, member, and the like similar to those of the force generating portion 530.

Since the connecting member 600 has the above-described configuration, a change in distance (first deformation) between both ends in the up-down direction of the force generating portion is small in the same-direction swing. The length of the force generating portion is set such that a strong tension is not produced at this time.

On the other hand, in the different-direction swing, the distance between the both ends in the up-down direction of the force generating portion largely changes (second deformation). In the present embodiment, a ratio (the second spring constant; second ratio) of a force (tension) from the force generating portion to the amount of deformation in the second deformation in the different-direction swing is at least three times greater and more preferably is at least five times greater than a ratio (the first spring constant; first ratio) of a force (tension) from the force generating portion to the amount of deformation in the first deformation in the same-direction swing. The ratio should only be more than or equal to 1.5 times. The ratio is not limited to these values as described above. Note that the amount of deformation can also be said to be an amount of displacement (a change in distance) of the upper end of the force generating portion relative to the lower end.

Therefore, the swing control portion 6 restrains or limits the different-direction swing in which one of the base end sides of the pair of swing portions 2 swings in a direction different from the other in the up-down direction. The configuration restrains or limits the difference between the height position of the leading end side of one of the pair of swing portions 2 relative to the vehicle body frame and the height position of the other leading end side relative to the vehicle body frame from increasing beyond the predetermined difference.

Swing bases 131" in Fig. 16 can also be provided with a swing control portion 7. Configurations equivalent to those of the above-described embodiment are denoted by the same reference numerals in Fig. 16. In Fig. 16, the shaft 150 fixed to a base end side of the right swing base 131" and the shaft 150 fixed to a base end side of the left swing base 131" are spaced by a predetermined distance in the vehicle width direction. Although in Fig. 16, the rear-wheel supporting member 132 is fixed to the swing base 131", a lower end of the rear-wheel supporting member 132 may be coupled to the swing base 131" so as to be swingable in the vehicle width direction like a double wishbone suspension. In this case, an upper end of the rear-wheel supporting member 132 is coupled to an upper side swing base, which is not illustrated, so as to be swingable in the vehicle width direction according to necessity. In such a case, the motor 50 may be fixed to the rear-wheel-side frame 121, and an output shaft of the motor 50 may be connected to the rear wheel 20 via a shaft, universal joint, or the like.

The swing control portion 7 has a connecting member 700 having a first fixed portion 710 fixed to the base end side of one of the pair of swing bases 131" with a bolt or the like and a second fixed portion 720 fixed to the base end side of the other one of the pair of swing bases 131" with a bolt or the like. The swing control portion 7 may have another member in addition to the connecting member 700. In one example, each of the fixed portions 710, 720 is a pulley fixed to the swing base 131" coaxially with the swing axis 150a. The connecting member 700 also functions as a force generating portion.

The connecting member 700 has force generating portions 731, 732 made of threadlike members, string-like members, band-like members, or the like that connect the first fixed portion 710 and the second fixed portion 720. The force generating portions 731, 732 of the present embodiment are band-like members that can be formed similarly to the force generating portion 530. One end of the force generating portion 731 is fixed to an upper end portion of the fixed portion 710, and the other end of the force generating portion 731 is fixed to a lower end portion of the fixed portion 720. One end of the force generating portion 732 is fixed to a lower end portion of the fixed portion 710, and the other end of the force generating portion 732 is fixed to an upper end portion of the fixed portion 720.

Since the connecting member 700 has the above-described configuration, the first fixed portion 710 and the second fixed portion 720 rotate in directions different from each other in the same-direction swing, and first deformation occurs in the force generating portions 731, 732 in accordance with the rotation. The lengths of the force generating portions 731, 732 between the first fixed portion 710 and the second fixed portion 720 are set such that a strong tension is not produced in the deformation.

On the other hand, the first fixed portion 710 and the second fixed portion 720, for example, rotate in the same direction in the different-direction swing, and second deformation in which one of the force generating portions 731, 732 is stretched more largely than in the first deformation because of the rotation.

Therefore, in the second deformation, the swing control portion 7 restrains or limits the first fixed portion 710 and the second fixed portion 720 from rotating about the swing axes 150a with a force greater than that in the first deformation. This restrains or limits the different-direction swing in which one of the base end sides of the pair of swing portions 2 swings in a direction different from the other in the up-down direction. The configuration restrains or limits the difference between the height position of the leading end side of one of the pair of swing portions 2 relative to the vehicle body frame and the height position of the other leading end side relative to the vehicle body frame from increasing beyond the predetermined difference.

Note that in the swing control portion 7, the first fixed portion 710 and the second fixed portion 720 can be gears such as spur gears rather than pulleys, and the first fixed portion 710 and the second fixed portion 720 which are gears can also be meshed with each other. In this case, the first fixed portion 710 and the second fixed portion 720 meshed with each other permit the same-direction swing and limit the different-direction swing.

One or more gears can also be provided between the first fixed portion 710 and the second fixed portion 720. In this case, it can be configured such that rotation of the first fixed portion 710 is transmitted to the second fixed portion 720 via the one or more gears and such that the one or more gears permit the same-direction swing and limits the different-direction swing. In addition, a member such as a rod or plate extending in the up-down direction can also be provided instead of the one or more gears, and rack gears extending in the up-down direction can also be provided on both left and right ends of the member. In this case, when the member is attached to the vehicle body frame with a linear guide or the like so as to be movable only in the up-down direction, the member permits the same-direction swing and limits the different-direction swing.

Note that each of the aforementioned swing control portions controls the tilting behavior that occurs during running, when a user stands up on the footrest, and the like as described above and contributes to stabilization of a vehicle attitude, and thus can also be referred to as a stabilizer.

Note that in a case of an aspect in which the swing control portion connects the pair of swing portions 2 like the connecting member 400 of the swing control portion 4, the force generating portion 430, 430", 440 may assist or replace the springs 140 by means of adjusting the spring constant of the force generating portion 430, 430", 440 in the same-direction swing. In other words, the swing control portion also has the function of a suspension spring together with the function of the stabilizer.

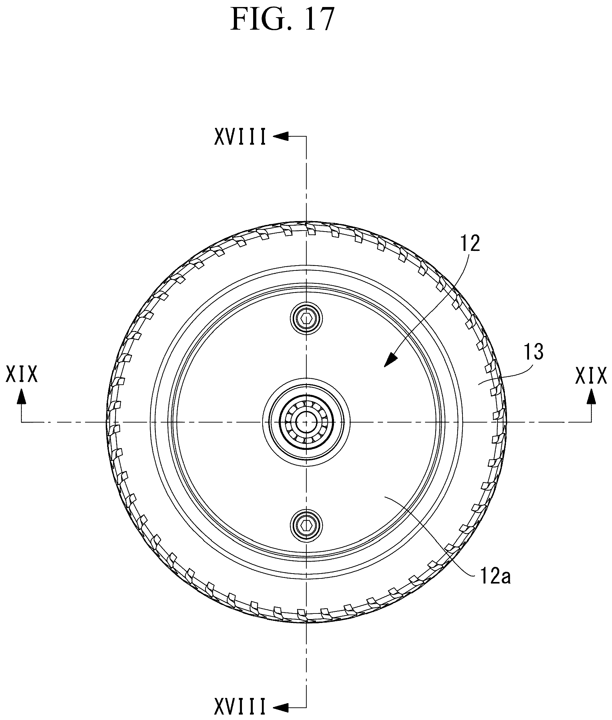

The front wheel 10 of the present embodiment is illustrated in Figs. 17 to 20. As in Figs. 17 to 19, the hub 12 has a pair of hub components 12a, 12b, and the hub components 12a, 12b are made of plastic, metal, or the like. The outer circumferential member 13 of the front wheel 10 is sandwiched by the pair of hub components 12a, 12b in an axial direction of the front wheel 10, and the outer circumferential member 13 is thereby fixed to the hub 12. Therefore, the pair of hub components 12a, 12b need to be fixed rigidly to each other. In the present embodiment, two or more bolts 14 are screwed with two or more nuts 15, so that the pair of hub components 12a, 12b are fixed to each other.

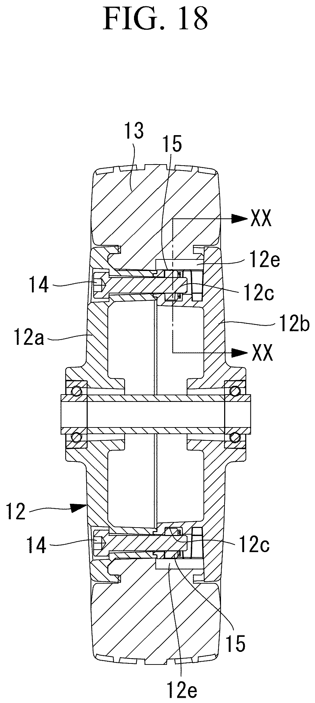

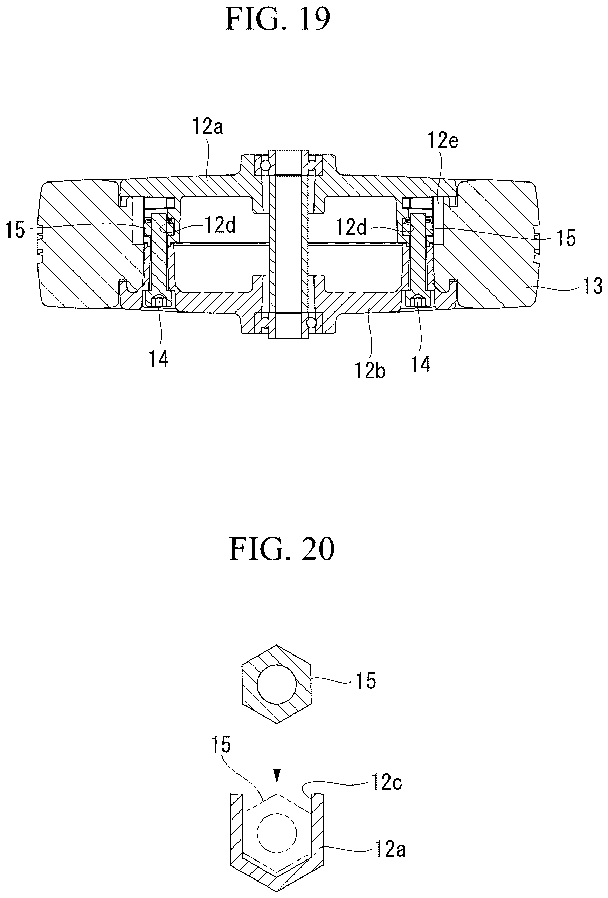

In the present embodiment, as illustrated in Fig. 18 and Fig. 20 which is a cross-sectional view taken along the line XX-XX in Fig. 18, one or more nut receiving portions 12c are formed in the hub component 12a, and the nut receiving portions are accessible from an outer side in the radial direction of the hub 12. In other words, the nut receiving portion 12c is open to the outer side in the radial direction of the hub 12, and its opening communicates with a space 12e in Fig. 19. The space 12e communicates with the outside of the wheel on the outer side in the radial direction if the outer circumferential member 13 does not exist. Therefore, prior to fixing the outer circumferential member 13 to the hub 12, the nut 15 can be stored in the nut receiving portion 12c from the outer side in the radial direction of the hub 12. It is preferable that the nut 15 be lightly fitted in the nut receiving portion 12c in order to facilitate assembling work.

As illustrated in Fig. 19, one or more nut receiving portions 12d similar to the nut receiving portions 12c are also formed in the hub component 12a.

The nut receiving portions 12c, 12d of the present embodiment are located at positions not visible from the outer side of the hub 12. The configuration can make an external appearance smart while rigidly fixing the outer circumferential member 13 to the hub 12.

A wheel having a structure similar to that of the front wheel 10 can also be used as the rear wheel 20 and can also be used as another wheel of the electric mobility vehicle.

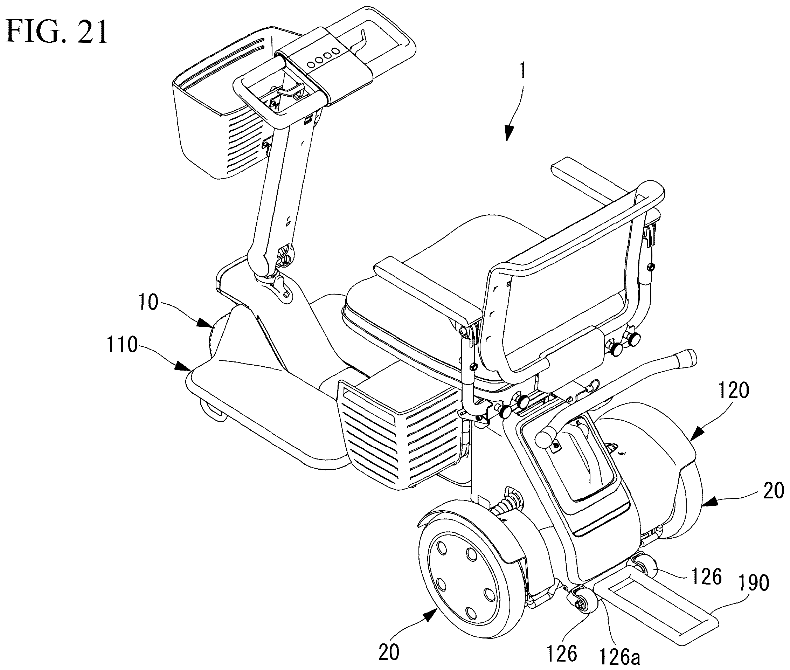

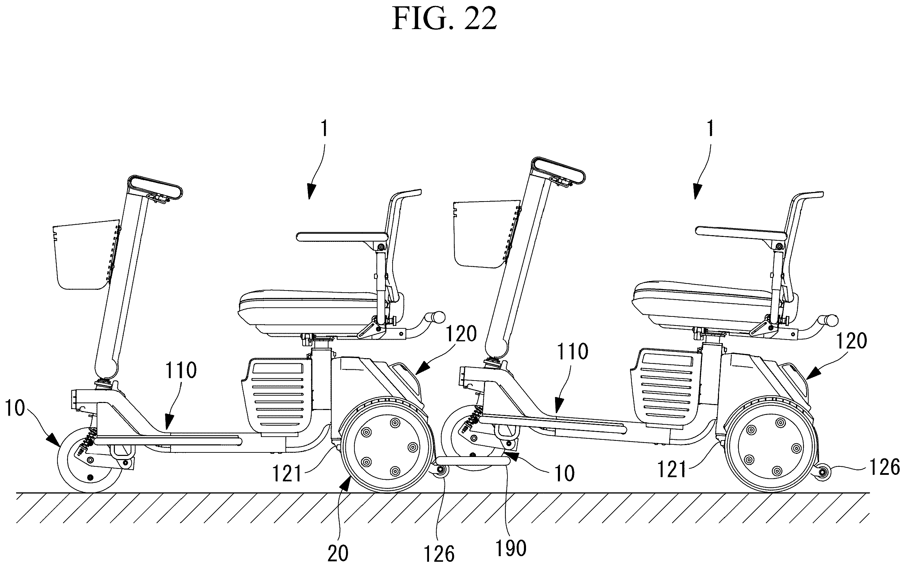

A case in which another electric mobility vehicle 1 is towed by the electric mobility vehicle 1 is illustrated in Figs. 21 and 22. As illustrated in Fig. 21, a towing member 190 is attached to a member 126a that connects the pair of fall prevention members 126, the rear-wheel-side frame 121, and the like, for example. The towing member 190 may be fixed to the member 126a, the rear-wheel-side frame 121, and the like with bolts or may be removably attached using a grip bolt, a toggle structure, or the like. In addition, the towing member 190 may be attached to the member 126a, the rear-wheel-side frame 121, and the like so as to be swingable in an upward direction from the state illustrated in Fig. 21. In addition, the towing member 190 may be formed so as to be foldable using a hinge or the like.

In a case of performing towing, a user places the front wheel 10 of the other electric mobility vehicle 1 on the towing member 190 as illustrated in Fig. 22. Then, the user rides on the electric mobility vehicle 1 of the front side to cause the electric mobility vehicle 1 of the front side to run. The other electric mobility vehicle 1 is thereby towed. The towing member 190 can also be attached to the other electric mobility vehicle 1, and the front wheel 10 of still another electric mobility vehicle 1 can also be placed on the towing member 190.

The center axis of the spring 140 is located at a vehicle front side relative to a rotational axis of the rear wheel 20. The configuration is advantageous for decreasing the dimension in the front-to-rear direction of the electric mobility vehicle 1.

In addition, on the rear-wheel-side cover 120a, a fender 120b (Figs. 1 and 5) of the right rear wheel 20 preferably is fixed to the right swing portion 2. The same applies to a left fender 120b. For example, the fender 120b is fixed to the rear-wheel supporting member 132, the motor 50, and the like of the swing portion 2 using two or more bolts (not illustrated).

In this case, the fender 120b moves in the up-down direction together with the swing portion 2 and the rear wheel 20. Therefore, even in a case in which the rear wheel 20 significantly moves in the up-down direction about the swing axis 150a, a change in shape in a case in which the electric mobility vehicle 1 is seen from the rear side, the lateral side, and the like appears to be small. The configuration can improve the function of the rear-wheel suspensions while maintaining the appearance of the electric mobility vehicle 1, thereby raising the feeling of the passenger of the electric mobility vehicle 1.

Note that also in a case in which the front-wheel-side vehicle body 110 is provided with a pair or two or more pairs of the front wheels 10, the above-described various effects of the rear-wheel suspensions and the swing control portion may be accomplished similarly.

In addition, also in cases such as a case in which another wheel is provided between the front wheels 10 and the rear wheels 20, a case in which another wheel is provided on the rear side of the rear wheels 20, or the like, the above-described various effects of the rear-wheel suspensions and the swing control portion may be accomplished similarly.

In addition, the above-described various configurations of the rear-wheel suspensions and the swing control portion may be employed for the pair of front wheels 10 and a pair of other wheels, and the above-described various effects may also be accomplished similarly in those cases.

In addition, the above-described various configurations of the rear-wheel suspensions and the swing control portion of the present embodiment can also be applied to the electric mobility vehicle described in PCT International Publication No. WO 2021/132533.

In addition, also in a case in which the front-wheel-side vehicle body 110 and the rear-wheel-side vehicle body 120 are coupled in an unremovable manner, the above-described various effects of the rear-wheel suspensions and the swing control portion may be accomplished. In this case, the front-wheel-side frame 111 and the rear-wheel-side frame 121 are integral, for example, and the vehicle body frame of the electric mobility vehicle 1 is formed by the front-wheel-side frame 111 and the rear-wheel-side frame 121.

In addition, in a case in which the rear-wheel supporting member 132 is not provided on the leading end portion of the swing base 131, one end of the spring 140 may be fixed to another member such as the housing of the motor 50 or may be fixed to another member fixed to or provided on the swing base 131. In this case, one end of the spring 140 is attached to the leading end portion of the swing base 131 with the member interposed therebetween.

On the other hand, one end of the spring 140 may be directly attached to the leading end portion of the swing base 131.

Also in these cases, the above-described various effects of the rear-wheel suspensions may be accomplished.

In addition, two (two or more) seat units 40 aligned in the front-to-rear direction can also be attached to the electric mobility vehicle 1. In this case, two (two or more) persons are seated on and ride on the electric mobility vehicle 1 so as to align in the front-to-rear direction. Also in such a case, the above-described various effects of the rear-wheel suspensions and the swing control portion may be accomplished.

### {Reference Signs List}

1 electric mobility vehicle
2 swing portion
3, 4, 4', 4", 5, 6, 7 swing control portion
10 front wheel
20 rear wheel (wheel)
30 mobility main body
40 seat unit
50 motor
110 front-wheel-side vehicle body
111 front-wheel-side frame
120 rear-wheel-side vehicle body
121 rear-wheel-side frame (vehicle body frame)
131 swing base
132 rear-wheel supporting member
140 spring
BA battery

## Claims

1. An electric mobility vehicle at least including a pair of wheels and a vehicle body frame, the electric mobility vehicle comprising:
a pair of swing portions,
wherein when defining that one end in a vehicle width direction of each of the swing portions is a base end and another end in the vehicle width direction is a leading end, a base end side of each of the swing portions is supported on the vehicle body frame so as to be swingable in an up-down direction about a swing axis extending in a vehicle front-to-rear direction, and each of the wheels is supported on each of the swing portions so as to move in the up-down direction together with a leading end side of each of the swing portions,
wherein the electric mobility vehicle comprises:
a biasing member that applies a downward force to each of the swing portions when the leading end side moves upward; and
a swing control portion that restrains a different-direction swing in which one of the base end sides of the pair of swing portions swings in a direction different from the other the base end sides of the pair of swing portions in the up-down direction or limits the different-direction swing to a predetermined range.

2. The electric mobility vehicle according to claim 1, wherein
the swing control portion includes an upper contact portion and a lower contact portion provided on the at least one of the base end sides of the pair of swing portions, and
the upper contact portion and the lower contact portion come into contact with the other of the base end sides of the pair of swing portions from above and below to limit the different-direction swing to the predetermined range.

3. The electric mobility vehicle according to claim 1, wherein
the swing control portion has a connection member that connects the base end sides of the pair of swing portions to each other,
the connection member has a force generating portion in which a first deformation occurs in a same-direction swing in which the base end sides of the pair of swing portions swing together in the up-down direction and in which second deformation different in mode from the first deformation occurs in the different-direction swing, and
a second ratio of a force generated by the force generating portion in the second deformation to an amount of deformation in the second deformation is equal to or greater than 1.5 times a first ratio of a force generated by the force generating portion in the first deformation to an amount of deformation in the first deformation.
